# EUROPÄISCHE PATENTSCHRIFT

(11) **EP 3 147 182 B1**
(45) Veröffentlichungstag und Bekanntmachung des Hinweises auf die Patenterteilung: **10.04.2019**
(21) Anmeldenummer: 16187804.6
(22) Anmeldetag: 08.09.2016
(51) Int. Cl.: B62D 15/02, G01D 5/244, G08G 1/16

(54) **VERFAHREN ZUM ZUMINDEST SEMI-AUTONOMEN MANÖVRIEREN EINES KRAFTFAHRZEUGS MIT ERKENNUNG EINES ODOMETRIEFEHLERS, RECHENEINRICHTUNG, FAHRERASSISTENZSYSTEM SOWIE KRAFTFAHRZEUG**
METHOD FOR AT LEAST SEMI-AUTOMATIC MANEUVERING OF A MOTOR VEHICLE WITH RECOGNITION OF AN ODOMETRY FAULT, COMPUTING APPARATUS, DRIVER ASSISTANCE SYSTEM AND MOTOR VEHICLE
PROCEDE DE MAN UVRE AU MOINS SEMI-AUTONOME D'UN VEHICULE AUTOMOBILE AVEC RECONNAISSANCE D'UNE ERREUR ODOMETRIQUE, DISPOSITIF DE CALCUL, SYSTEME D'ASSISTANCE AU CONDUCTEUR ET VEHICULE AUTOMOBILE

(30) Priorität: 25.09.2015 DE 102015116220
(43) Veröffentlichungstag der Anmeldung: 29.03.2017
(73) Patentinhaber: Valeo Schalter und Sensoren GmbH, 74321 Bietigheim-Bissingen (DE)
(72) Erfinder: Bariant, Jean-Francois, 74321 Bietigheim-Bissingen (DE)

(56) Entgegenhaltungen:
- EP-A1- 1 679 526
- EP-A1- 2 113 436
- EP-A2- 1 400 785
- DE-A1-102010 061 904
- DE-A1-102013 103 569
- US-A1- 2011 087 406

## Beschreibung

Die vorliegende Erfindung betrifft ein Verfahren zum zumindest semi-autonomen Manövrieren eines Kraftfahrzeugs, bei welchem anhand von Sensordaten zumindest eines Ultraschallsensors eine Parklücke in einem Umgebungsbereich des Kraftfahrzeugs erkannt wird sowie ein Abstand zwischen dem Kraftfahrzeug und einem die Parklücke begrenzenden Objekt bestimmt wird, eine Fahrtrajektorie zum Einparken des Kraftfahrzeugs in die Parklücke bestimmt wird, das Kraftfahrzeug entlang der Fahrtrajektorie manövriert wird und während des Manövrieren des Kraftfahrzeugs an einer vorbestimmten Position auf Grundlage von Odometrie und dem bestimmten Abstand ein erster Abstandswert sowie anhand der Sensordaten ein zweiter Abstandswert bestimmt werden, wobei der erste und der zweite Abstandswert jeweils den Abstand zwischen dem Kraftfahrzeug und dem Objekt beschreiben. Darüber hinaus betrifft die vorliegende Erfindung eine Recheneinrichtung für ein Fahrerassistenzsystem. Ferner betrifft die vorliegende Erfindung ein Fahrerassistenzsystem für ein Kraftfahrzeug sowie ein Kraftfahrzeug.

Das Interesse richtet sich vorliegend insbesondere auf Fahrerassistenzsysteme, welche den Fahrer beim Manövrieren des Kraftfahrzeugs und insbesondere beim Einparken des Kraftfahrzeugs in eine Parklücke unterstützen. Aus dem Stand der Technik sind bereits Fahrerassistenzsysteme bekannt, welche mithilfe von Ultraschallsensoren Parklücken beziehungsweise freie Stellplätze erkennen können und den Fahrer beim Einparkvorgang unterstützen. Hierbei kann der Fahrer sowohl beim Längsparken als auch beim Querparken unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes beziehungsweise vollautonomes Manövrieren des Kraftfahrzeugs ermöglichen.

Weiterhin ist es bekannt, beim Manövrieren des Kraftfahrzeugs und insbesondere beim Einparken des Kraftfahrzeugs die Bewegung des Kraftfahrzeugs mittels Odometrie zu erfassen. Dabei kann beispielsweise die Anzahl der Radumdrehungen beim Manövrieren des Kraftfahrzeugs erfasst werden. Zudem kann die Fahrtrichtung des Kraftfahrzeugs anhand der Daten eines Lenkwinkelsensors und/oder eines Drehratensensors bestimmt werden. Um die Bewegung des Kraftfahrzeugs mittels Odometrie möglichst genau erfassen zu können, bedarf eines genauen Odometriemodells. In der Realität ist es aber der Fall, dass infolge von Fertigungstoleranzen des Kraftfahrzeugs Abweichungen auftreten. Beispielsweise kann das Lenksystem des Kraftfahrzeugs entsprechende Toleranzen aufweisen. Ferner können Toleranzen bezüglich des Chassis und der Kraftfahrzeuggeometrie, beispielsweise der Spurweite, einer Parallelität der Räder oder dergleichen, vorhanden sein. Ferner kann eine Asymmetrie des Kraftfahrzeugs vorliegen.

Um diese Fehler in der Odometrie ausgleichen zu können, wird beispielsweise das sogenannte SLAM-Verfahren (SLAM - Simultaneous Localisation and Mapping) verwendet. Bei diesem Verfahren kann beispielsweise eine Karte der Umgebung des Kraftfahrzeugs erstellt werden und die räumliche Lage des Kraftfahrzeugs innerhalb dieser Karte geschätzt werden. Dieses Verfahren weist allerdings den Nachteil auf, dass es sehr rechenaufwändig ist. Insbesondere wenn mehrere Objekte beziehungsweise Merkmale in der Umgebung erkannt werden, steigt die Rechenleistung deutlich an.

In diesem Zusammenhang beschreibt die DE 10 2009 039 085 A1 ein Verfahren zum Manövrieren eines Fahrzeugs, bei welchem ein bodenniedriges Hindernis in der Umgebung des Fahrzeugs durch zumindest einen Entfernungssensor des Fahrzeugs erfasst wird. Zudem wird ein Abstand des Hindernisses zum Fahrzeug bestimmt und bei einem weiteren Annähern einer bodennahen und/oder bodenberührenden Komponente des Fahrzeugs zu dem bodenniedrigen Hindernis der Abstand im Nahbereich bestimmt. Um den Abstand des Fahrzeugs beziehungsweise der bodennahen und/oder bodenberührenden Bodenkomponente zu dem Hindernis zu bestimmen, können Informationen von Wegsensoren, die die durchfahrende Weglänge entlang der Parkbahn bestimmen, berücksichtigt werden.

Darüber hinaus ist in der DE 10 2009 046 158 A1 ein Verfahren zur Unterstützung eines Fahrers eines Fahrzeugs bekannt. Hierbei wird die seitliche Umgebung des Fahrzeugs während der Vorbeifahrt erfasst und ermittelt, ob eine geeignete Parklücke vorliegt. Zudem wird eine Einparktrajektorie in die Parklücke berechnet. Während des Einparkens wird die Umgebung des Fahrzeugs erfasst und es wird eine geänderte Einparktrajektorie berechnet, die ein Überfahren einer seitlichen Begrenzung erlaubt, wenn die seitliche Begrenzung eine Höhe aufweist, die ein Überfahren mit Karosserieteilen erlaubt.

Weiterhin betrifft DE 10 2013 103 569 A1 eine Parkplatzerfassungsvorrichtung, die einen Parkplatz neben geparkten Fahrzeugen erfasst Der nächstliegende Stand der Technik ist in der DE 10 2013 103 569 A1 zu sehen.

Es ist Aufgabe der vorliegenden Erfindung, eine Lösung aufzuzeigen, wie das Manövrieren eines Kraftfahrzeugs, insbesondere während eines Einparkvorgangs, zuverlässiger und mit einer geringeren Rechenleistung ermöglicht werden kann.

Diese Aufgabe wird erfindungsgemäß durch ein Verfahren, durch eine Recheneinrichtung, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum zumindest semi-autonomen Manövrieren eines Kraftfahrzeugs. Hierbei wird anhand von Sensordaten zumindest eines Ultraschallsensors eine Parklücke in einem Umgebungsbereich des Kraftfahrzeugs erkannt sowie ein Abstand zwischen dem Kraftfahrzeug und einem die Parklücke begrenzenden Objekt bestimmt. Zudem wird eine Fahrtrajektorie zum Einparken des Kraftfahrzeugs in die Parklücke bestimmt und das Kraftfahrzeug entlang der Fahrtrajektorie manövriert. Während des Manövrierens des Kraftfahrzeugs werden an einer vorbestimmten Position auf Grundlage von Odometrie und dem bestimmten Abstand ein erster Abstandswert sowie anhand der Sensordaten ein zweiter Abstandswert bestimmt, wobei der erste und der zweite Abstandswert jeweils den Abstand zwischen dem Kraftfahrzeug und dem Objekt beschreiben. Zudem ist es vorgesehen, dass anhand eines Vergleichs des ersten Abstandswerts und des zweiten Abstandswerts ein Korrekturwert zum Korrigieren der Fahrtrajektorie bestimmt wird. Der bestimmte Korrekturwert wird in einer Speichereinheit gespeichert. Bei zumindest einem nachfolgenden Manövrieren des Kraftfahrzeugs in eine weitere Parklücke wird ein weiterer Korrekturwert bestimmt und in der Speichereinheit gespeichert, wobei beim jeweiligen Manövrieren des Kraftfahrzeugs in die Parklücke ein Typ der Parklücke bestimmt und zusammen mit dem jeweiligen Korrekturwert in der Speichereinheit gespeichert und der systematische Fehler für den Typ der Parklücke bestimmt wird.

Mithilfe des Verfahrens soll das Kraftfahrzeug zumindest semi-autonom in die Parklücke eingeparkt werden. Dazu wird zunächst die Parklücke anhand der Sensordaten des zumindest einen Ultraschallsensors erkannt. Hierzu kann während das Kraftfahrzeug an der Parklücke vorbeibewegt wird, der Umgebungsbereich des Kraftfahrzeugs mit dem zumindest einen Ultraschallsensor erfasst werden. Der zumindest eine Ultraschallsensor stellt die Sensordaten bereit, die den Umgebungsbereich beschreiben. Diese Sensordaten können dann von einer entsprechenden Recheneinrichtung ausgewertet werden. Anhand der Sensordaten wird zudem zumindest ein Objekt erkannt, welches die Parklücke begrenzt. Bei diesem Objekt, welches die Parklücke begrenzt, handelt es sich bevorzugt um einen Bordstein oder um eine Wand. Falls sich anhand der Sensordaten ergibt, dass die Parklücke zum Einparken für das Kraftfahrzeug geeignet ist, wird eine Fahrtrajektorie ausgehend von einem Startpunkt bestimmt. Ausgehend von diesem Startpunkt wird das Kraftfahrzeug anschließend entlang der Fahrtrajektorie manövriert. Dabei kann das Manövrieren semi-autonom erfolgen. In diesem Fall übernimmt beispielsweise ein Fahrerassistenzsystem des Kraftfahrzeugs den Eingriff in die Lenkung. Der Fahrer betätigt weiterhin das Gaspedal und die Bremse. Es kann auch vorgesehen sein, dass das Kraftfahrzeug vollautonom entlang der Fahrtrajektorie manövriert wird. In diesem Fall übernimmt das Fahrerassistenzsystem beispielsweise auch einen Eingriff in die Bremse und/oder den Antriebsmotor.

Anhand der Sensordaten des Ultraschallsensors wird der Abstand zwischen dem Kraftfahrzeug und dem Objekt bestimmt. Dies kann beispielsweise erfolgen, wenn sich das Kraftfahrzeug an der Startposition befindet. Während der Fahrt des Kraftfahrzeugs entlang der Fahrtrajektorie wird die Bewegung des Kraftfahrzeugs mittels Odometrie bestimmt. Dazu können die Radumdrehungen zumindest eines Rades des Kraftfahrzeugs mit einem entsprechenden Sensor erfasst werden. Zusätzlich kann die Fahrtrichtung des Kraftfahrzeugs anhand der Daten eines Lenkwinkelsensors und/oder der Daten eines Drehratensensors bestimmt werden. An einer vorbestimmten Position beziehungsweise zu einem vorbestimmten Zeitpunkt während der Fahrt auf der Fahrtrajektorie wird ein erster Abstandswert bestimmt. Der erste Abstandswert wird auf Grundlage des Abstands, der beispielsweise an der Startposition anhand der Sensordaten bestimmt wurde und der Odometriedaten bestimmt. Ferner wird an der vorbestimmten Position eine erneute Messung mit dem zumindest einen Ultraschallsensor durchgeführt. Anhand der Sensordaten des Ultraschallsensors kann dann ein zweiter Abstandswert bestimmt werden. Der erste und der zweite Abstandswert beschreiben jeweils den Abstand zwischen dem Kraftfahrzeug und dem Objekt. Insbesondere beschreiben der erste und der zweite Abstandswert jeweils einen Abstand zwischen einem Bezugspunkt des Kraftfahrzeugs und dem Objekt. Dieser Bezugspunkt kann beispielsweise der Mittelpunkt der Hinterachse des Kraftfahrzeugs oder ein vorbestimmter Punkt der Karosserie des Kraftfahrzeugs sein.

Erfindungsgemäß ist es nun vorgesehen, dass der erste Abstandswert und der zweite Abstandswert miteinander verglichen werden. Insbesondere kann ein Unterschied zwischen dem ersten Abstandswert und dem zweiten Abstandswert bestimmt werden. Dieser Unterschied beschreibt dann den Fehler, der durch Ungenauigkeiten in der Odometrie begründet ist. Diese Ungenauigkeiten können beispielsweise durch Fertigungstoleranzen des Kraftfahrzeugs hervorgerufen sein. Vorliegend wird davon ausgegangen, dass anhand der Sensordaten des Ultraschallsensors der Abstand zwischen dem Kraftfahrzeug und dem Objekt präzise bestimmt werden kann und somit anhand des Vergleichs des ersten und des zweiten Abstandswerts der Odometriefehler bestimmt werden kann. Auf Grundlage des Vergleichs des ersten und des zweiten Abstandswerts kann dann ein Korrekturwert bestimmt werden, welcher dazu verwendet wird, die Fahrtrajektorie zu korrigieren. Das Verfahren zeichnet sich insbesondere dadurch aus, dass es mit einer geringen Rechenleistung durchgeführt werden kann.

Dabei wird der bestimmte Korrekturwert in einer Speichereinheit gespeichert und bei zumindest einem nachfolgenden Manövrieren des Kraftfahrzeugs in eine weitere Parklücke wird ein weiterer Korrekturwert bestimmt und in der Speichereinheit gespeichert. Mit anderen Worten kann in mehreren zeitlich aufeinanderfolgenden Einparkmanövern, während der das Kraftfahrzeug jeweils semi-autonom manövriert wird, jeweils der Korrekturwert bestimmt werden. Der jeweils bestimmte Korrekturwert kann in einer Speichereinheit hinterlegt werden. Somit kann beispielsweise bestimmt werden, ob bei den jeweiligen Einparkmanövern ein Odometriefehler vorliegt. Insbesondere kann bestimmt werden, ob es sich bei dem Fehler um einen systematischen Fehler oder um einen sporadischen Fehler, der beispielsweise durch Rauschen begründet ist, handelt.

Weitehrin wird beim jeweiligen Manövrieren des Kraftfahrzeugs in die Parklücke ein Typ der Parklücke bestimmt und zusammen mit dem jeweiligen Korrekturwert in der Speichereinheit gespeichert und der systematische Fehler wird für den Typ der Parklücke bestimmt. Der Typ der Parklücke kann beispielsweise beschreiben, ob es sich bei der Parklücke um eine Parklücke zum Längsparken, zum Querparken oder zum Schrägparken handelt. Ferner kann der Typ der Parklücke angeben, auf welcher Seite ausgehend von dem Fahrzeug die Parklücke angeordnet ist. Beispielsweise kann der Typ der Parklücke beschreiben, ob sich die Parklücke ausgehend von dem Kraftfahrzeug auf der linken oder auf der rechten Seite befindet. Diese Information bezüglich des Typs der Parklücke kann zusammen mit dem dazugehörigen Korrekturwert in der Speichereinheit hinterlegt werden. Somit kann beispielsweise bestimmt werden, ob der Korrekturwert für alle Typen von Parklücken in gleichem Maße auftritt. Weiterhin kann bestimmt werden, ob der Odometriefehler beispielsweise nur bei einem bestimmten Typ von Parklücke oder einer bestimmten Seite, auf der sich die Parklücke befindet, auftritt. Somit kann der Fehler in dem Odometrie-Modell eingegrenzt werden und somit leichter aufgefunden werden.

Bevorzugt wird die Fahrtrajektorie während des Manövrierens des Kraftfahrzeugs korrigiert und das Kraftfahrzeug wird nach dem Korrigieren der Fahrtrajektorie auf der korrigierten Fahrtrajektorie manövriert. Mit anderen Worten kann die Fahrtrajektorie noch während des Einparkvorgangs des Kraftfahrzeugs korrigiert werden. Wenn sich das Kraftfahrzeug beispielsweise während der Fahrt auf der Fahrtrajektorie dem die Einparklücke begrenzenden Objekt, beispielsweise einem Bordstein oder einer Wand, nähert, kann anhand des Vergleichs des ersten Abstandswerts und des zweiten Abstandswerts der Korrekturwert bestimmt werden und die Fahrtrajektorie korrigiert werden. Die korrigierte Fahrtrajektorie kann beispielsweise ausgehend von der aktuellen Position des Kraftfahrzeugs bestimmt werden. Somit wird das Kraftfahrzeug also zunächst auf der Fahrtrajektorie manövriert und anschließend auf der korrigierten Fahrtrajektorie weiterbewegt. Auf diese Weise kann noch während des Einparkens des Kraftfahrzeugs der Odometriefehler erkannt und berücksichtigt werden. Damit kann das Kraftfahrzeug zuverlässig in die Parklücke eingeparkt werden.

In einer weiteren Ausführungsform wird der Korrekturwert während des Manövrierens des Kraftfahrzeugs entlang eines ersten Einparkzugs der Fahrtrajektorie bestimmt und zum Korrigieren der Fahrtrajektorie wird der erste Einparkzug und/oder zumindest ein auf dem ersten Einparkzug folgender, zweiter Einparkzug verändert. In Abhängigkeit von den Abmessungen des Kraftfahrzeugs und/oder den Abmessungen der Parklücke kann die Fahrtrajektorie mehrere Einparkzüge umfassen. Dabei wird zwischen den Einparkzügen die Fahrtrichtung des Kraftfahrzeugs geändert. Beispielsweise kann das Kraftfahrzeug in dem ersten Einparkzug rückwärts bewegt werden und in dem nachfolgenden zweiten Einparkzug vorwärts bewegt werden. Vorliegend ist es insbesondere vorgesehen, dass anhand des Vergleichs des ersten und des zweiten Abstandswerts der Odometriefehler bereits während der Fahrt des Kraftfahrzeugs entlang des ersten Einparkzugs bestimmt wird. Je nach Position des Kraftfahrzeugs kann dann bereits der erste Einparkzug korrigiert werden. Es kann auch vorgesehen sein, dass ein zweiter oder weitere nachfolgende Einparkzüge korrigiert werden. Somit kann auch bei dem Vorliegen eines Odometriefehlers das Einparken in die Parklücke ermöglicht werden. Folglich ist es beispielsweise nicht erforderlich, dass der Einparkvorgang abgebrochen wird und gegebenenfalls wiederholt werden muss.

Weiterhin ist es vorteilhaft, wenn anhand der in der Speichereinheit gespeicherten Korrekturwerte ein systematischer Fehler bezüglich der Odometrie bestimmt wird. Mit anderen Worten können die Korrekturwerte, die in einer vorbestimmten Anzahl von Einparkmanövern bestimmt wurden, ausgewertet werden. Dabei können die jeweiligen Korrekturwerte beispielsweise eine Information enthalten, wie groß der Unterschied zwischen dem ersten Abstandswert und dem zweiten Abstandswert jeweils war. Wenn sich beispielsweise eine vorbestimmte Anzahl von Korrekturwerten bezüglich des Unterschieds des ersten und des zweiten Abstandswerts entsprechen, kann von einem systematischen Fehler ausgegangen werden. Dieser kann beispielsweise durch die Vorgaben beziehungsweise Parameter des Odometrie-Modells begründet sein. Beispielsweise kann ein falscher Durchmesser des Rades hinterlegt sein, anhand dessen die Bewegung des Kraftfahrzeugs bestimmt wird. Wenn der Korrekturwert beziehungsweise der Odometriefehler nur sporadisch auftritt, kann davon ausgegangen werden, dass dieser durch eine Störung oder durch Rauschen begründet ist.

Vorzugsweise wird nach dem Bestimmen des systematischen Fehlers beim Bestimmen einer Fahrtrajektorie die Fahrtrajektorie vor dem Manövrieren des Kraftfahrzeugs anhand des systematischen Fehlers korrigiert und das Kraftfahrzeug anschließend entlang der korrigierten Fahrtrajektorie manövriert. Wenn bei einer vorbestimmten Anzahl beziehungsweise einer Mehrzahl von Einparkmanövern erkannt wurde, dass ein systematischer Fehler bezüglich der Odometrie vorliegt, kann dieser korrigiert werden beziehungsweise beim Bestimmen einer nachfolgenden Fahrtrajektorie berücksichtigt werden. Damit kann der Odometriefehler bereits vor dem Einparken des Kraftfahrzeugs berücksichtigt werden. Damit kann das Kraftfahrzeug sicher und zuverlässig in die Parklücke eingeparkt werden.

In einer weiteren Ausgestaltung wird anhand der Sensordaten des zumindest einen Ultraschallsensors eine Höhe des die Parklücke begrenzenden Objekts bestimmt. Hierzu können beispielsweise während der Bewegung des Kraftfahrzeugs entlang der Fahrtrajektorie fortlaufend Messungen mit dem Ultraschallsensor durchgeführt werden. Wenn das die Parklücke begrenzende Objekt beispielsweise bei der Annäherung ab einem bestimmten Zeitpunkt nicht mehr erkannt wird, kann davon ausgegangen werden, dass es sich um ein niedriges Objekt, beispielsweise einen Bordstein handelt. Dies ist beispielsweise dadurch begründet, dass der Erfassungsbereich des Ultraschallsensors über dem Objekt liegt und somit das Objekt nicht mehr erfasst werden kann. Zudem kann es vorgesehen sein, dass mit dem Ultraschallsensor ein Ultraschallsignal ausgesendet wird und mehrere Echos des Ultraschallsignals empfangen werden. Anhand der verschiedenen Echos kann dann auch die Höhe des Objekts abgeschätzt werden. Somit kann das Objekt, das die Parklücke begrenzt, näher charakterisiert werden und somit die Abstandsmessung beziehungsweise die Bestimmung des zweiten Abstandswerts zuverlässiger und genauer erfolgen.

Des Weiteren ist es bevorzugt vorgesehen, dass der zweite Abstandswert in Abhängigkeit von einer Einbauhöhe des Ultraschallsensors bestimmt wird. Die Einbauposition und insbesondere die Einbauhöhe des Ultraschallsensors können beispielsweise in der Speichereinheit hinterlegt sein. Insbesondere wenn das Objekt eine geringere Höhe aufweist als die Einbauhöhe, kann sich bei der Abstandsmessung eine Abweichung ergeben. Dies kann beim Bestimmen des Abstands beziehungsweise des zweiten Abstandswerts berücksichtigt werden.

Bei dem die Parklücke begrenzenden Objekt kann es sich auch um eine Wand handeln. In diesem Fall ist es nicht erforderlich die Höhe des Objekts zu bestimmen, da hier der zweite Abstandswert üblicherweise genau aus den Sensordaten des Ultraschallsensors bestimmt werden kann. Grundsätzlich kann es auch vorgesehen sein, dass während der Fahrt des Kraftfahrzeugs entlang der Fahrtrajektorie mehrere Messungen mit dem Ultraschallsensor durchgeführt werden. Damit anhand der Sensordaten, die in den jeweiligen Messungen bestimmt wurden, kann dann auch die Ausrichtung des Kraftfahrzeugs zu dem Objekt beziehungsweise die relative Lage des Kraftfahrzeugs zu dem Objekt bestimmt werden. Die Ausrichtung kann dann mit den Odometriedaten verglichen werden. Somit kann auch hier ein Odometriefehler bestimmt und korrigiert werden, der die Ausrichtung des Kraftfahrzeugs relativ zu dem Objekt betrifft.

Bevorzugt ist die Parklücke, in welche das Kraftfahrzeug manövriert wird, zum Längsparken des Kraftfahrzeugs ausgebildet. Vorliegend wird das Verfahren insbesondere beim Parken in eine Längsparklücke beziehungsweise beim Parallelparken verwendet. Dem liegt die Erkenntnis zugrunde, dass es insbesondere bei derartigen Parklücken schwierig ist, die Position des Fahrzeugs nach dem durchgeführten Einparkmanöver wieder zu korrigieren. Weiterhin besteht die Gefahr, dass das Kraftfahrzeug mit dem Objekt kollidiert. Durch die Verwendung des Verfahrens kann das Kraftfahrzeug sicher und zuverlässig in die Längsparklücke eingeparkt werden.

Eine erfindungsgemäße Recheneinrichtung für ein Fahrerassistenzsystem eines Kraftfahrzeugs ist zum Durchführen eines erfindungsgemäßen Verfahrens ausgebildet. Die Recheneinrichtung kann beispielsweise durch einen entsprechenden Mikroprozessor gebildet sein. Die Recheneinrichtung kann auch durch ein elektronisches Steuergerät des Kraftfahrzeugs gebildet sein.

Ein erfindungsgemäßes Fahrerassistenzsystem für ein Kraftfahrzeug umfasst eine erfindungsgemäße Recheneinrichtung. Zudem umfasst das Fahrerassistenzsystem zumindest einen Ultraschallsensor. Bevorzugt ist es vorgesehen, dass das Fahrerassistenzsystem eine Mehrzahl von Ultraschallsensoren umfasst, die verteilt an dem Kraftfahrzeug angeordnet sind.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Recheneinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: in schematischer Darstellung ein Kraftfahrzeug gemäß einer Ausführungsform der vorliegenden Erfindung, welches ein Fahrerassistenzsystem aufweist;
- Fig. 2: das Kraftfahrzeug gemäß Fig. 1, welches an einer Parklücke vorbeibewegt wird;
- Fig. 3: das Kraftfahrzeug, welches in die bekannte Parklücke entlang einer Fahrtrajektorie eingeparkt wird;
- Fig. 4: das Kraftfahrzeug, das relativ zu einem die Parklücke begrenzenden Bordstein angeordnet ist; und
- Fig. 5: das Kraftfahrzeug beim Einparken in die Parklücke, wobei eine Fahrtrajektorie zum Einparken korrigiert wird.

In den Figuren werden gleiche und funktionsgleiche Elemente mit den gleichen Bezugszeichen versehen.

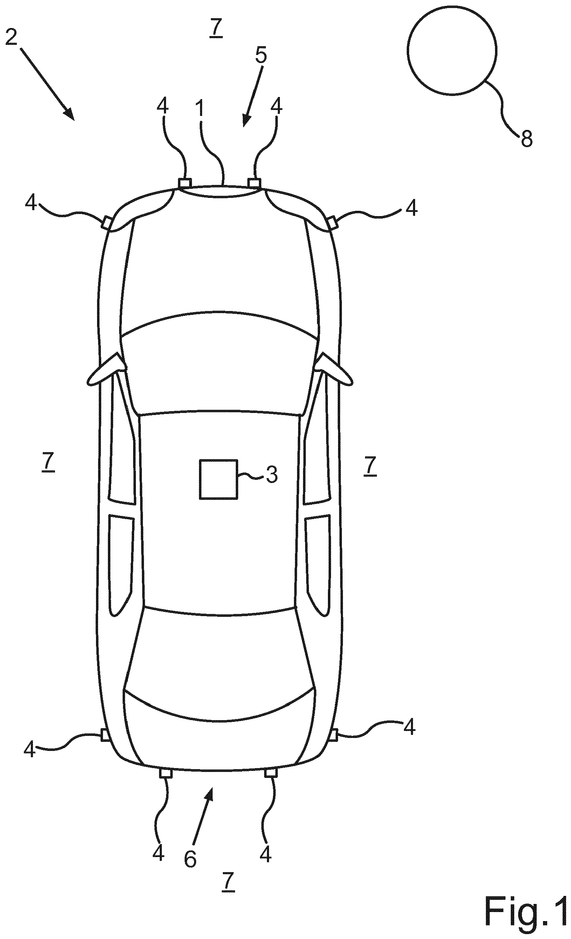

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2, welches eine Recheneinrichtung 3 umfasst. Die Recheneinrichtung 3 kann beispielsweise einen entsprechenden Mikroprozessor umfassen. Darüber hinaus umfasst das Fahrerassistenzsystem 2 zumindest einen Ultraschallsensor 4.

In dem vorliegenden Ausführungsbeispiel umfasst das Fahrerassistenzsystem 2 acht Ultraschallsensoren 4, die verteilt an dem Kraftfahrzeug 1 angeordnet sind. Dabei sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Die Ultraschallsensoren 4 sind dazu ausgebildet, ein Objekt 8 in einem Umgebungsbereich 7 des Kraftfahrzeugs 1 zu erfassen. Die Ultraschallsensoren 4 können beispielsweise in entsprechenden Durchgangsöffnungen in den Stoßfängern des Kraftfahrzeugs 1 angeordnet sein. Es kann auch vorgesehen sein, dass die Ultraschallsensoren 4 verdeckt hinter den Stoßfängern angeordnet sind.

Die Ultraschallsensoren 4 stellen jeweils Sensordaten bereit, welche den Umgebungsbereich 7 des Kraftfahrzeugs 1 beschreiben. Die jeweiligen Ultraschallsensoren 4 sind zur Datenübertragung mit der Recheneinrichtung 3 verbunden. Entsprechende Datenleitungen sind vorliegend der Übersichtlichkeit halber nicht dargestellt. Somit können die von den Ultraschallsensoren 4 bereitgestellten Sensordaten an die Recheneinrichtung 3 übertragen werden. Vorliegend weist das Fahrerassistenzsystem 2 eine zentrale Recheneinrichtung 3 auf. Grundsätzlich kann es vorgesehen sein, dass jedem der Ultraschallsensoren 4 eine separate Recheneinrichtung 3 zugeordnet ist.

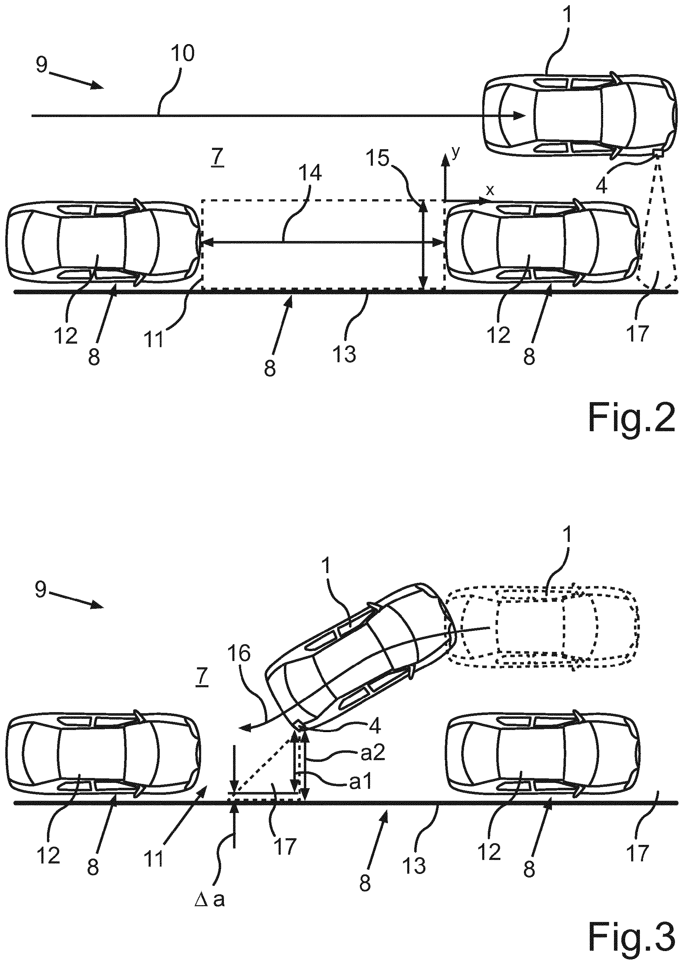

Fig. 2 zeigt das Kraftfahrzeug 1 in einer Verkehrssituation. Vorliegend wird das Kraftfahrzeug 1 auf einer Fahrbahn 9 entlang eines Pfeils 10 bewegt. Vorliegend wird das Kraftfahrzeug 1 an einer Parklücke 11 vorbeibewegt. Die Parklücke 11 ist vorliegend durch mehrere Objekte 8 begrenzt. Hier ist die Parklücke 11 durch die beiden geparkten Fahrzeuge 12 sowie einen Bordstein 13 begrenzt. Beim Vorbeibewegen des Kraftfahrzeugs 1 an der Parklücke 11 wird der Umgebungsbereich 7 des Kraftfahrzeugs 1 fortlaufend erfasst. Mit den Ultraschallsensoren 4 werden dabei fortlaufend Sensordaten bereitgestellt, die dann mittels der Recheneinrichtung 3 ausgewertet werden. Anhand der Sensordaten kann dann die Recheneinrichtung 3 die Abmessungen der Parklücke 11 bestimmen. Vorliegend weist die Parklücke 11 eine Länge 14 entlang einer ersten Richtung beziehungsweise einer x-Achse und eine Tiefe 15 entlang einer zweiten Richtung beziehungsweise entlang einer y-Achse auf. Die Länge 14 und die Tiefe 15 der Parklücke 11 sind vorliegend derart, dass das Kraftfahrzeug 1 in die Parklücke 11 eingeparkt werden kann. Vorliegend befindet sich das Kraftfahrzeug 1 an einer Startposition, ausgehend von der eine Fahrtrajektorie 16 zum Einparken des Kraftfahrzeugs 1 in die Parklücke 11 bestimmt wird. An der Startposition wird zudem mit einem der Ultraschallsensoren 4, vorliegend mit dem vorderen rechten Ultraschallsensor 4 ein Abstand zwischen dem Kraftfahrzeug 1 und dem die Parklücke 11 begrenzenden Objekt 8 beziehungsweise dem Bordstein 13 bestimmt. Ein Erfassungsbereich 17 des vorderen rechten Ultraschallsensors 4 ist vorliegend schematisch dargestellt.

Fig. 3 zeigt das Kraftfahrzeug 1 gemäß Fig. 2, das entlang der bestimmten Fahrtrajektorie 16 in die Parklücke 11 bewegt wird. Während der Bewegung des Kraftfahrzeugs 1 entlang der Fahrtrajektorie 16 wird die Position des Kraftfahrzeugs 1 mittels Odometrie bestimmt. Hierzu werden die Umdrehungen zumindest eines Rades des Kraftfahrzeugs 1 erfasst. Zudem wird die aktuelle Fahrtrichtung des Kraftfahrzeugs 1 anhand der Daten eines Lenkwinkelsensors und/oder eines Drehratensensors bestimmt.

An einer vorbestimmten Position des Kraftfahrzeugs 1 während der Fahrt entlang der Fahrtrajektorie 16 wird ein erster Abstandswert a1 bestimmt, der den Abstand zwischen dem Kraftfahrzeug 1 und dem Objekt 8 beziehungsweise dem Bordstein 13 beschreibt. Der erste Abstandswert a1 wird in Abhängigkeit von dem Abstand zwischen dem Kraftfahrzeug 1 und dem Bordstein 13 bestimmt, der an der Startposition bestimmt wurde. Ferner wird auf Grundlage der Odometriedaten die Bewegung des Kraftfahrzeugs 1 zwischen der Startposition und der vorbestimmten Position bestimmt und hieraus der erste Abstandswert a1 ermittelt. Zudem wird an dieser vorbestimmten Position des Kraftfahrzeugs 1 eine Messung mit dem hinteren rechten Ultraschallsensor 4 durchgeführt. Anhand der Sensordaten, die mit dem hinteren rechten Ultraschallsensor 4 bereitgestellt werden, wird ein zweiter Abstandswert a2 bestimmt, der ebenfalls den Abstand zwischen dem Kraftfahrzeug 1 und dem Bordstein 13 beschreibt. Vorliegend ergibt sich zwischen dem ersten Abstandswert a1 und dem zweiten Abstandswert a2 ein Unterschied Δa. Dieser ist durch einen Fehler in der Odometrie begründet. Anhand dieses Unterschieds Δa kann nun ein Korrekturwert zum Korrigieren der Fahrtrajektorie 16 bestimmt werden.

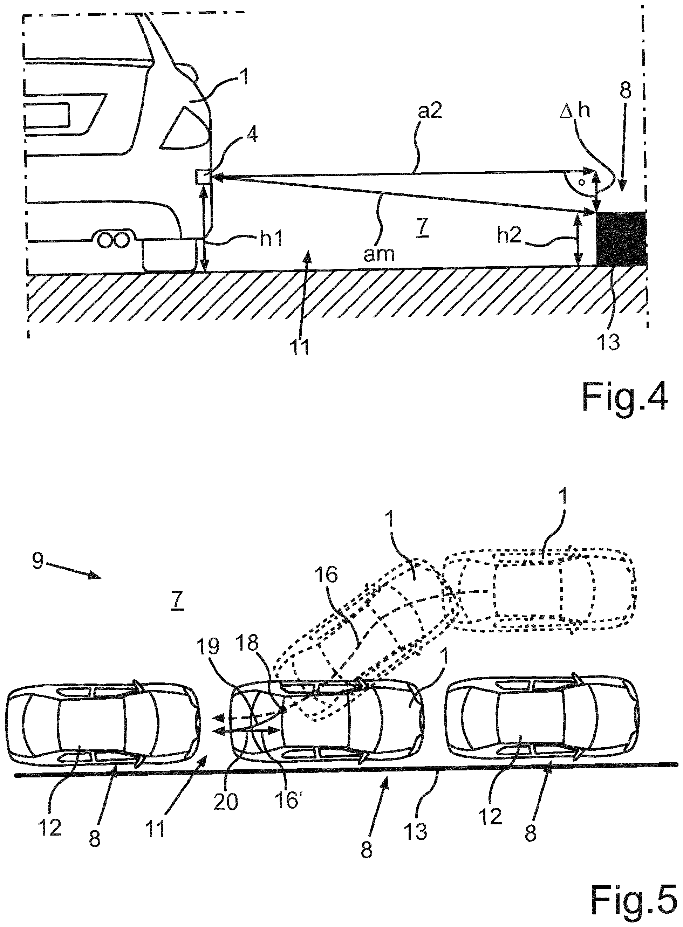

Fig. 4 zeigt das Kraftfahrzeug 1, bei der Bestimmung des zweiten Abstandswerts a2. Bei dem die Parklücke 11 begrenzenden Objekt 8 beziehungsweise bei dem Bordstein 13 handelt es sich um ein niedriges Objekt 8. Eine Höhe h2 des Objekts 8 beziehungsweise des Bordsteins 13 ist dabei geringer als eine Einbauhöhe h1 des Ultraschallsensors 4. Die Höhe h2 des Objekts 8 kann beispielsweise bei der Annäherung des Kraftfahrzeugs 1 an das Objekt 8 kontinuierlich erfasst werden. Wenn das Objekt 8 bei der Annäherung des Kraftfahrzeugs 1 an das Objekt 8 zu einem bestimmten Zeitpunkt nicht mehr erkannt wird, kann davon ausgegangen werden, dass sich das Objekt 8 außerhalb des Erfassungsbereichs 17 befindet und es sich somit um ein niedriges Objekt 8 handelt. Ferner können mehrere Echos mit dem Ultraschallsensor 4 ausgesendeten Ultraschallsignal untersucht werden, um die Höhe h2 des Objekts 8 zu bestimmen. Es kann auch vorgesehen sein, dass das Objekt 8 grundsätzlich als Bordstein 13 erkannt wird und für die Höhe h2 des Bordsteins 13 ein vorbestimmter Wert verwendet wird.

Anhand der bekannten Einbauhöhe h1 des Ultraschallsensors 4 und der Höhe h2 des Objekts 8 kann dann ein Höhenunterschied Δh bestimmt werden. Ferner wird berücksichtigt, dass anhand der Sensordaten des Ultraschallsensors 4 ein gemessener Abstand am bestimmt wird, der sich von dem realen Abstand zwischen dem Kraftfahrzeug 1 und dem Objekt 8 unterscheidet. Anhand von geometrischen Beziehungen kann dann der zweite Abstandswert a2 bestimmt werden.

Der Korrekturwert, der anhand des Unterschieds Δa zwischen dem ersten Abstandswert a1 und dem zweiten Abstandswert a2 bestimmt wurde, kann nun dazu verwendet werden, die Fahrtrajektorie 16 zu korrigieren. Dies ist in Fig. 5 schematisch dargestellt. Vorliegend wird die Fahrtrajektorie 16 während des Einparkens des Kraftfahrzeugs 1 in die Parklücke 11 korrigiert. Dazu wird das Kraftfahrzeug 1 bis zu einem Punkt 18 entlang der Fahrtrajektorie 16 manövriert und anschließend entlang einer korrigierten Fahrtrajektorie 16' bewegt. Vorliegend umfasst die korrigierte Fahrtrajektorie 16' einen ersten Einparkzug 19, der sich durch die Bewegung des Kraftfahrzeugs 1 entlang der Fahrtrajektorie 16 und der Bewegung des Kraftfahrzeugs 1 entlang eines ersten Abschnitts entlang der korrigierten Fahrtrajektorie 16'ergibt. Zudem umfasst die korrigierte Fahrtrajektorie 16' einen zweiten Einparkzug 20. Bei dem ersten Einparkzug 19 wird das Kraftfahrzeug 1 rückwärts bewegt und bei dem anschließenden zweiten Einparkzug 20 wird das Kraftfahrzeug 1 vorwärts bewegt. Auf diese Weise kann der Odometriefehler noch während des Einparkens des Kraftfahrzeugs 1 in die Parklücke 11 erkannt werden und korrigiert werden.

Grundsätzlich kann der anhand der Abstandswerte a1 und a2 bestimmte Korrekturwert in einer Speichereinheit der Recheneinrichtung 3 gespeichert werden. Dabei ist es insbesondere vorgesehen, dass für mehrere aufeinanderfolgende Einparkmanöver jeweils der Korrekturwert gespeichert wird. Anhand der Auswertung der Korrekturwerte kann dann beispielsweise ein systematischer Fehler bezüglich der Odometrie erkannt werden. Eine Fahrtrajektorie 16, die nach dem Bestimmen des systematischen Fehlers bestimmt wird, kann bereits vor dem Einparken des Kraftfahrzeugs 1 in die Parklücke 11 korrigiert werden.

## Patentansprüche

1. Verfahren zum zumindest semi-autonomen Manövrieren eines Kraftfahrzeugs (1), bei welchem anhand von Sensordaten zumindest eines Ultraschallsensors (4) eine Parklücke (11) in einem Umgebungsbereich (7) des Kraftfahrzeugs (1) erkannt wird sowie ein Abstand zwischen dem Kraftfahrzeug (1) und einem die Parklücke (11) begrenzenden Objekt (8) bestimmt wird, eine Fahrtrajektorie (16) zum Einparken des Kraftfahrzeugs (1) in die Parklücke (11) bestimmt wird, das Kraftfahrzeug (1) entlang der Fahrtrajektorie (16) manövriert wird und während des Manövrierens des Kraftfahrzeugs (1) an einer vorbestimmten Position auf Grundlage von Odometrie und dem bestimmten Abstand ein erster Abstandswert (a1) sowie anhand der Sensordaten ein zweiter Abstandswert (a2) bestimmt werden, wobei der erste und der zweite Abstandswert (a1, a2) jeweils den Abstand zwischen dem Kraftfahrzeug (1) und dem Objekt (8) beschreiben,
wobei anhand eines Vergleichs des ersten Abstandswerts (a1) und des zweiten Abstandswerts (a2) ein Korrekturwert zum Korrigieren der Fahrtrajektorie (16) bestimmt wird,
**dadurch gekennzeichnet, dass**
der bestimmte Korrekturwert in einer Speichereinheit gespeichert wird, bei zumindest einem nachfolgenden Manövrieren des Kraftfahrzeugs (1) in eine weitere Parklücke (11) ein weiterer Korrekturwert bestimmt wird und in der Speichereinheit gespeichert wird, wobei beim jeweiligen Manövrieren des Kraftfahrzeugs (1) in die Parklücke (11) ein Typ der Parklücke (11) bestimmt wird und zusammen mit dem jeweiligen Korrekturwert in der Speichereinheit gespeichert wird und der systematische Fehler für den Typ der Parklücke (11) bestimmt wird..

2. Verfahren nach Anspruch 1,
**dadurch gekennzeichnet, dass**
die Fahrtrajektorie (16) während des Manövrierens des Kraftfahrzeugs (1) korrigiert wird und das Kraftfahrzeug (1) nach dem Korrigieren der Fahrtrajektorie (16) auf einer korrigierten Fahrtrajektorie (16') manövriert wird.

3. Verfahren nach Anspruch 2,
**dadurch gekennzeichnet, dass**
der Korrekturwert während des Manövrieren des Kraftfahrzeugs (1) entlang eines ersten Einparkzugs (19) der Fahrtrajektorie (16) bestimmt wird und zum Korrigieren der Fahrtrajektorie (16) zumindest ein Abschnitt des ersten Einparkzugs (19) und/oder zumindest ein auf den ersten Einparkzug (19) folgender, zweiter Einparkzug (20) verändert wird.

4. Verfahren nach einem der vorherigen Ansprüche ,
**dadurch gekennzeichnet, dass**
anhand der in der Speichereinheit gespeicherten Korrekturwerte ein systematischer Fehler bezüglich der Odometrie bestimmt wird.

5. Verfahren nach einem der vorherigen Ansprüche,
**dadurch gekennzeichnet, dass**
nach dem Bestimmen des systematischen Fehlers beim Bestimmen einer Fahrtrajektorie (16) die Fahrtrajektorie (16) vor dem Manövrieren des Kraftfahrzeugs (1) anhand des systematischen Fehlers korrigiert wird und das Kraftfahrzeug (1) anschließend entlang der korrigierten Fahrtrajektorie (16') manövriert wird.

6. Verfahren nach einem der vorhergehenden Ansprüche,
**dadurch gekennzeichnet, dass**
anhand der Sensordaten des zumindest einen Ultraschallsensors (4) eine Höhe (h2) des die Parklücke (11) begrenzenden Objekts (8) bestimmt wird.

7. Verfahren nach einem der vorhergehenden Ansprüche,
**dadurch gekennzeichnet, dass**
der zweite Abstandswert (a2) in Abhängigkeit von einer Einbauhöhe (h1) des Ultraschallsensors (4) bestimmt wird.

8. Verfahren nach einem der vorhergehenden Ansprüche,
**dadurch gekennzeichnet, dass**
die Parklücke (11), in welche das Kraftfahrzeug (1) manövriert wird, zum Längsparken des Kraftfahrzeugs (1) ausgebildet ist.

9. Recheneinrichtung (3) für ein Fahrerassistenzsystem (1) eines Kraftfahrzeugs (1), welches zum Durchführen eines Verfahrens nach einem der vorhergehenden Ansprüche ausgebildet ist.

10. Fahrerassistenzsystem (2) für ein Kraftfahrzeug (1) mit einer Recheneinrichtung (3) nach Anspruch 9 und mit zumindest einem Ultraschallsensor.

11. Kraftfahrzeug (1) mit einem Fahrerassistenzsystem (2) nach Anspruch 10.

## Claims

1. Method for at least semi-autonomous manoeuvring of a motor vehicle (1), in which a parking space (11) in a surrounding area (7) of the motor vehicle (1) is detected on the basis of sensor data of at least one ultrasound sensor (4), and a distance between the motor vehicle (1) and an object (8) bounding the parking space (11) is determined, a travel trajectory (16) for parking the motor vehicle (1) in the parking space (11) is determined when the motor vehicle (1) is manoeuvred along the travel trajectory (16), and during the manoeuvring of the motor vehicle (1), at a predetermined position a first distance value (a1) is determined on the basis of odometry and the determined distance, and a second distance value (a2) is determined on the basis of the sensor data, wherein the first and the second distance values (a1, a2) each describe the distance between the motor vehicle (1) and the object (8),
wherein a correction value for correcting the travel trajectory (16) is determined on the basis of a comparison of the first distance value (a1) and of the second distance value (a2),
**characterized in that**
the determined correction value is stored in a memory unit, during at least one subsequent manoeuvre of the motor vehicle (1) into a further parking space (11) a further correction value is determined and stored in the memory unit, wherein during the respective manoeuvring of the motor vehicle (1) into the parking space (11) a type of parking space (11) is determined and is stored together with the respective correction value in the memory unit, and the systematic error for the type of parking space (11) is determined.

2. Method according to Claim 1,
**characterized in that**
the travel trajectory (16) is corrected during the manoeuvring of the motor vehicle (1), and after the correction of the travel trajectory (16) the motor vehicle (1) is manoeuvred on a corrected travel trajectory (16').

3. Method according to Claim 2,
**characterized in that**
the correction value is determined during the manoeuvring of the motor vehicle (1) along a first parking movement (19) of the travel trajectory (16), and in order to correct the travel trajectory (16) at least one section of the first parking movement (19) and/or at least one second parking movement (20), following the first parking movement (19), is changed.

4. Method according to one of the preceding claims, **characterized in that**
a systematic error in respect of the odometry is determined on the basis of the correction values stored in the memory unit.

5. Method according to one of the preceding claims, **characterized in that**
after the determination of the systematic error during the determination of a travel trajectory (16), the travel trajectory (16) is corrected on the basis of the systematic error before the manoeuvring of the motor vehicle (1), and the motor vehicle (1) is subsequently manoeuvred along the corrected travel trajectory (16').

6. Method according to one of the preceding claims, **characterized in that**
a height (h2) of the object (8) bounding the parking space (11) is determined on the basis of the sensor data of the at least one ultrasound sensor (4).

7. Method according to one of the preceding claims, **characterized in that**
the second distance value (a2) is determined as a function of an installation height (h1) of the ultrasound sensor (4).

8. Method according to one of the preceding claims, **characterized in that**
the parking space (11) into which the motor vehicle (1) is manoeuvred is designed for the longitudinal parking of the motor vehicle (1).

9. Computing device (3) for a driver assistance system (1) of a motor vehicle (1), which driver assistance system (1) is designed to carry out a method according to one of the preceding claims.

10. Driver assistance system (2) for a motor vehicle (1) having a computing device (3) according to Claim 9 and having at least one ultrasound sensor.

11. Motor vehicle (1) having a driver assistance system (2) according to Claim 10.

## Revendications

1. Procédé de manoeuvre au moins semi-autonome d'un véhicule automobile (1), dans lequel une place de stationnement (11) est détectée dans une zone (7) environnante du véhicule automobile (1) sur la base de données de capteurs d'au moins un capteur à ultrasons (4) et une distance entre le véhicule automobile (1) et un objet (8) délimitant la place de stationnement (11) est déterminée, une trajectoire de déplacement (16) pour le stationnement du véhicule automobile (1) dans la place de stationnement (11) est déterminée, le véhicule automobile (1) est manoeuvré le long de la trajectoire de déplacement (16) et, pendant la manoeuvre du véhicule (1) à une position prédéterminée, une première valeur de distance (a1) est déterminée sur la base de l'odométrie et de la distance déterminée et une seconde valeur de distance (a2) est déterminée sur la base des données de capteurs, dans lequel les première et seconde valeurs de distance (a1, a2) décrivent respectivement la distance entre le véhicule automobile (1) et l'objet (8),
dans lequel une valeur de correction destinée à corriger la trajectoire de déplacement (16) est déterminée sur la base d'une comparaison de la première valeur de distance (a1) et de la seconde valeur de distance (a2), **caractérisé en ce que** la valeur de correction déterminée est stockée dans une unité de mémoire, une autre valeur de correction est déterminée lors d'au moins une manoeuvre ultérieure du véhicule automobile (1) dans une autre place de stationnement (11) et est stockée dans l'unité de mémoire, dans lequel, lors de la manoeuvre respective du véhicule automobile (1) dans la place de stationnement (11), un type de la place de stationnement (11) est déterminé et stocké en association avec la valeur de correction respective dans l'unité de mémoire et l'erreur systématique concernant le type de la place de stationnement (11) est déterminée.

2. Procédé selon la revendication 1,
**caractérisé en ce que** la trajectoire de déplacement (16) est corrigée pendant la manoeuvre du véhicule automobile (1) et le véhicule automobile (1) est déplacé sur une trajectoire de déplacement corrigée (16') après correction de la trajectoire de déplacement (16).

3. Procédé selon la revendication 2,
**caractérisé en ce que** la valeur de correction est déterminée pendant la manoeuvre du véhicule automobile (1) le long d'un premier trajet de stationnement (19) de la trajectoire de déplacement (16) et, afin de corriger la trajectoire de déplacement (16), au moins une section du premier trajet de stationnement (19) et/ou au moins un second trajet de stationnement (20) suivant le premier trajet de stationnement (19) est modifié.

4. Procédé selon l'une des revendications précédentes,
**caractérisé en ce qu'**une erreur odométrique systématique est déterminée sur la base des valeurs de correction stockées dans l'unité de mémoire.

5. Procédé selon l'une des revendications précédentes,
**caractérisé en ce que**, après avoir déterminé l'erreur systématique lors de la détermination d'une trajectoire de déplacement (16), la trajectoire de déplacement (16) est corrigée avant la manoeuvre du véhicule automobile (1) sur la base de l'erreur systématique et le véhicule automobile (1) est ensuite manoeuvré le long de la trajectoire de déplacement corrigée (16').

6. Procédé selon l'une des revendications précédentes,
**caractérisé en ce qu'**une hauteur (h2) de l'objet (8) délimitant la place de stationnement (11) est déterminée sur la base des données de capteurs dudit au moins un capteur à ultrasons (4).

7. Procédé selon l'une des revendications précédentes,
**caractérisé en ce que** la seconde valeur de distance (a2) est déterminée en fonction d'une hauteur d'installation (h1) du capteur à ultrasons (4).

8. Procédé selon l'une des revendications précédentes,
**caractérisé en ce que** la place de stationnement (11) dans laquelle le véhicule automobile (1) est manoeuvré est conçue pour le stationnement longitudinal du véhicule automobile (1).

9. Dispositif de calcul (3) destiné à un système d'assistance au conducteur (1) d'un véhicule automobile (1), qui est conçu pour mettre en oeuvre un procédé selon l'une des revendications précédentes.

10. Système d'assistance au conducteur (2) destiné à un véhicule automobile (1) comportant un dispositif de calcul (3) selon la revendication 9 et au moins un capteur à ultrasons.

11. Véhicule automobile (1) comportant un système d'assistance au conducteur (2) selon la revendication 10.
